# EUROPÄISCHE PATENTSCHRIFT

(11) **EP 1 640 111 B1**
(45) Veröffentlichungstag und Bekanntmachung des Hinweises auf die Patenterteilung: **28.12.2016**
(21) Anmeldenummer: 05020682.0
(22) Anmeldetag: 22.09.2005
(51) Int. Cl.: B23K 26/60

(54) **Verfahren zur Herstellung von geschweissten Strukturen**
Process for manufacturing of welded structures
Procédé pour la fabrication de structures soudées

(30) Priorität: 22.09.2004 DE 102004045961; 13.10.2004 US 618128 P
(43) Veröffentlichungstag der Anmeldung: 29.03.2006
(73) Patentinhaber: Airbus Deutschland GmbH, 21129 Hamburg (DE)
(72) Erfinder: Hackius, Jens, 28203 Bremen (DE); Kocik, Rainer, 28209 Bremen (DE)
(74) Vertreter: Kopf Westenberger Wachenhausen Patentanwälte PartG mbB

(56) Entgegenhaltungen:
- DE-A1- 19 623 103
- DE-C- 610 819
- DE-C1- 19 639 667

## Beschreibung

Die Erfindung betrifft ein Verfahren gemäß dem Oberbegriff des Anspruchs 1 zur Herstellung von geschweißten Strukturen, für den Anwendungsbereich Verkehrstechnik, beispielsweise Luftfahrt.

In Flugzeugen werden großflächige Innendruck belastete Luftfahrtstrukturen, insbesondere Rumpfschalenstrukturen mittels Niet-, Schweiß- oder Klebeverfahren gefügt. Dabei werden komplexe Rumpfschalenstrukturen, beispielsweise Clip-Haut-Verbindungen, primär durch Nieten gefügt.

Die genannte Niettechnologie hat jedoch den Nachteil, dass infolge von Blechüberlappungen zwischen Clip und Haut und durch eingebrachte Dichtmasse in der Fügezone das Gewicht von komplexen Rumpfschalenstrukturen zunimmt.

Als Alternative bietet sich das sogenannte Laserstrahlschweißen mit drahtförmigen Zusatzwerkstoff an. Ein Nachteil dieses Verfahrens liegt jedoch in der sehr geringen Zugänglichkeit des Schweißkopfes aufgrund der Schweißdrahtfördereinrichtung.

Ferner hat sich herausgestellt, dass bei dieser Lösung reduzierte Festigkeitseigenschaften der Schweißnaht im Vergleich zu denjenigen des Grundwerkstoffs auftreten, aufgrund von Werkstoffentfestigung infolge inhomogener Schweißgutdurchmischung bei drahtförmigen Zusatzwerkstoffen. Insbesondere im Anfangs- und Endbereich eines Clips verringern sich die mechanisch-technologischen Eigenschaften durch Risse, Kerben und Krater bei Verwendung von drahtförmigem Zusatzwerkstoff.

DE 196 23 103 beschreibt ein Verfahren zur Herstellung einer T-Verbindung zweier durch Schweißen miteinander zu verbindenden Profile, wobei das erste Profil stumpf auf das zweite Profil aufgesetzt und beide Profile miteinander verschweißt werden.

DE 196 39 667 C1 beschreibt ein Verfahren zum Schweißen von Profilen auf großformatigen Aluminium-Strukturbauteilen mittels Laserstrahlen unter Verwendung eines das Strukturbauteil aufnehmbaren variierbaren Trägers, eines Rollenführungs- und Spannsystems zur Fixierung der Profile auf dem Strukturbauteil und eines Laserstrahl-Führungssystems, das von dem Rollenführungs- und Spannsystem entkoppelt ist.

DE 198 44 035 C1 beschreibt ein Schalenbauteil für ein Flugzeug, mit daran aufgeschweißten Stringern.

Aufgabe der Erfindung ist die Schaffung eines Systems und Verfahrens zur Herstellung von geschweißten Clip-Haut-Verbindungen oder Stringer-Haut-Verbindungen, wobei eine Schweißnaht verbesserte mechanische Eigenschaften aufweist, sowie die Schaffung eines Zusatzwerkstoffs, der in dem erfindungsgemäßen System und Verfahren verwendet werden kann.

Die Lösung der gestellten Aufgabe ist dem Patentanspruch 1 zu entnehmen. Vorteilhafte Weiterbildungen der Erfindung sind in den Unteransprüchen angegeben.

Gemäß der Erfindung ist ein Verfahren zum Verbinden von Bauteilen für die Luftfahrt mittels Schweißen angegeben. Dabei ist eines der zu verschweißenden Bauteile eine Außenhaut eines Flugzeugrumpfs und das andere zu verschweißende Bauteil mindestens ein Stringer oder Clip. Es wird ein Schweißzusatzwerkstoff verwendet, der eine U-Profilform aufweist, die an die Bauweise des mindestens einen Stringers oder Clips angepasst ist, der vor dem Schweißen an einer Stelle positioniert wird, an der die Bauteile miteinander zu verbinden sind, und der durch Verwendung einer Wärmequelle derart behandelt wird, dass die Bauteile miteinander verschweißt werden.

Ein System zum Herstellen von geschweißten Strukturen enthält gemäß einer Ausführungsform der Erfindung einen Schweißzusatzwerkstoff, der vor einem Schweißvorgang an einer Stelle positioniert wird, an der Bauteile miteinander zu verschweißen sind. Dabei ist der Schweißzusatzwerkstoff an die Bauform mindestens eines der Bauteile angepasst. Durch Verwendung einer Wärmequelle, beispielsweise eines Laserstrahls, wird das Material der Bauteile und der Schweißzusatzwerkstoff geschmolzen, um eine Verbindung miteinander einzugehen, so dass die Bauteile miteinander verschweißt werden.

Gemäß dem erfindungsgemäßen Verfahren zum Verbinden von Bauteilen mittels Schweißen wird ein Schweißzusatzwerkstoff zuerst vor dem Schweißen an einer Stelle positioniert, an der die Bauteile miteinander zu verbinden sind. Der Schweißzusatzwerkstoff ist dabei vorzugsweise in seiner äußeren Form mindestens der Bauweise (Bauform) eines der Bauteile angepasst, und wird durch Verwendung einer Wärmequelle, beispielsweise ein Laserstrahl, derart behandelt, dass der Schweißzusatzwerkstoff schmilzt und die Bauteile miteinander verschweißt werden.

Gemäß der Erfindung zeichnet sich der Schweißzusatzwerkstoff dadurch aus, dass er eine Bauform (Profil) aufweist, die der Bauform eines entsprechenden Bauteils, das zu verschweißen ist, angepasst ist. Der Schweißzusatzwerkstoff weist ein U-Profil auf.

Gemäß der Erfindung werden fertigungstechnische Vorteile gegenüber drahtförmigen Schweißzusatzwerkstoffen erreicht durch ein vereinfachtes Fertigungskonzept für ein wirtschaftliches Schweißverfahren innerhalb komplexer Strukturen, da eine Drahtfördereinrichtung entfällt und der Schweißkopf eine höhere Zugänglichkeit aufweist.

Darüber hinaus ergeben sich fertigungstechnische Vorteile dadurch, dass ein geringerer Aufwand zur Qualitätssicherung erforderlich ist, aufgrund vereinfachter Prozesskontrolle hinsichtlich des Vorhandenseins von Zusatzwerkstoff im Schweißgut, da das Vorpositionieren innerhalb der Fügestelle keine Online-Kontrolle während des Schweißprozesses erfordert.

Darüber hinaus ergeben sich gemäß der Erfindung mechanisch-technologische Eigenschaftsverbesserungen der Schweißnaht durch eine geringere Kerbwirkung durch bauweisenangepasste Nahtgeometriegestaltung. Mit dem Zusatzwerkstoff lassen sich Risse, Kerben und Krater infolge inhomogener Schweißgutdurchmischung verhindern. Die verbesserte mechanisch-technologische Eigenschaft der Schweißnaht ergibt sich ebenfalls durch eine geringere Werkstoffentfestigung infolge geringerer Streckenenergie.

Darüber hinaus lassen sich mit der Erfindung auch prozesstechnische Vorteile erzielen, da der Laserschweißprozess durch gleichmäßige Verteilung des Zusatzwerkstoffs über den gesamten Nahtquerschnitt stabilisiert wird, was zu einer geringeren Prozessporosität in der Schweißnaht führt. Die erhöhte Prozesssicherheit kann durch nahezu beliebig anpassbare Querschnittsabmessungen des Zusatzwerkstoffs erreicht werden.

Im Folgenden werden unter Bezugnahme auf die beigefügten Zeichnungen bevorzugte Ausführungsbeispiele der Erfindung beschrieben, wobei gleiche Komponenten in den Figuren mit gleichen Bezugsziffern versehen sind. Es zeigen:
Fig. 1 eine perspektivische Teilansicht eines Flugzeugrumpfes zur Verdeutlichung einer genieteten Clip-Haut-Verbindung gemäß dem Stand der Technik,
Fig. 2 eine perspektivische Teilansicht und Seitenansicht einer geschweißten Clip-Haut-Verbindung gemäß dem Stand der Technik,
Fig. 3 eine perspektivische Ansicht eines Systems zur Herstellung einer geschweißten Struktur, und eine Querschnittsansicht der Schweißnaht,
Fig. 4A eine perspektivische Ansicht eines Systems zur Herstellung einer geschweißten Struktur gemäß einem Ausführungsbeispiel der Erfindung,
Fig. 4B eine perspektivische Ansicht eines Systems zu Herstellung einer weiteren geschweißten Struktur gemäß einem Ausführungsbeispiel der Erfindung,
Fig. 5 perspektivische Ansichten von Profilformen eines bauweisenangepassten Schweißzusatzwerkstoffs gemäß Ausführungsbeispielen der Erfindung, und
Fig. 6 eine Querschnittsansicht einer Schweißnaht mit bauweisenangepasstem profiliertem Schweißzusatzwerkstoff.

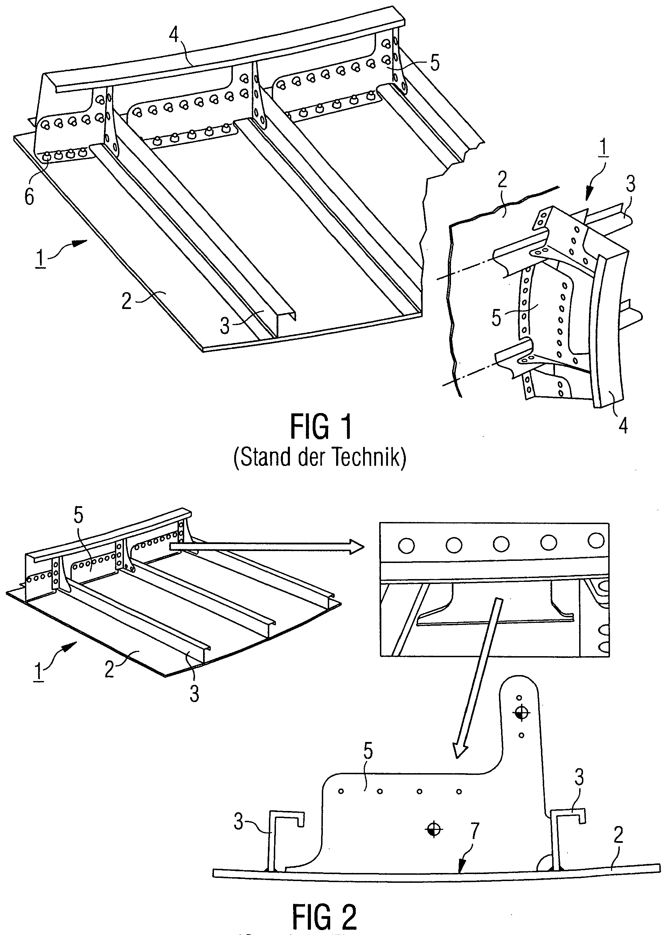

Fig. 1 zeigt eine Außenhaut 2 des Flugzeugrumpfes 1, auf der eine Mehrzahl von Stringern 3 angeordnet sind. Quer zur Längsrichtung der Stringer 3 ist ein montiertes Spantprofil 4 gezeigt.

Das Spantprofil 4 erstreckt sich üblicherweise über mehrere Stringer 3 in einer Richtung, die im wesentlichen senkrecht zur Längsrichtung eines Stringers 3 verläuft. Das Spantprofil 4 ist mittels einer Clip-Haut-Verbindung an der Außenhaut 2 des Flugzeugrumpfes 1 durch eine Mehrzahl von Nieten 6 befestigt.

Bei der in Fig. 1 gezeigten Clip-Haut-Verbindung erfolgt zwischen dem Clip 5 und der Außenhaut 2 des Flugzeugrumpfes 1 eine Blechüberlappung, was zu einer Zunahme des Gewichts der Flugzeugstruktur führt. Darüber hinaus muss bei einer derartigen Clip-Haut-Verbindung in der Fügezone eine Dichtmasse eingebracht werden, was weitere Gewichtsnachteile zur Folge hat.

Fig. 2 zeigt eine perspektivische Teil- und Seitenansicht einer geschweißten Clip-Haut-Verbindung gemäß dem Stand der Technik.. Die Fig. 2 unterscheidet sich von der Fig. 1 lediglich dadurch, dass anstelle der Niete 6 zwischen der Außenhaut 2 und dem Clip 5 eine Schweißnaht 7 vorgesehen ist. Schweißnaht 7 erstreckt sich vorzugsweise über die gesamte Kontaktfläche zwischen dem Clip 5 und der Außenhaut 2 des Flugzeugrumpfes 1.

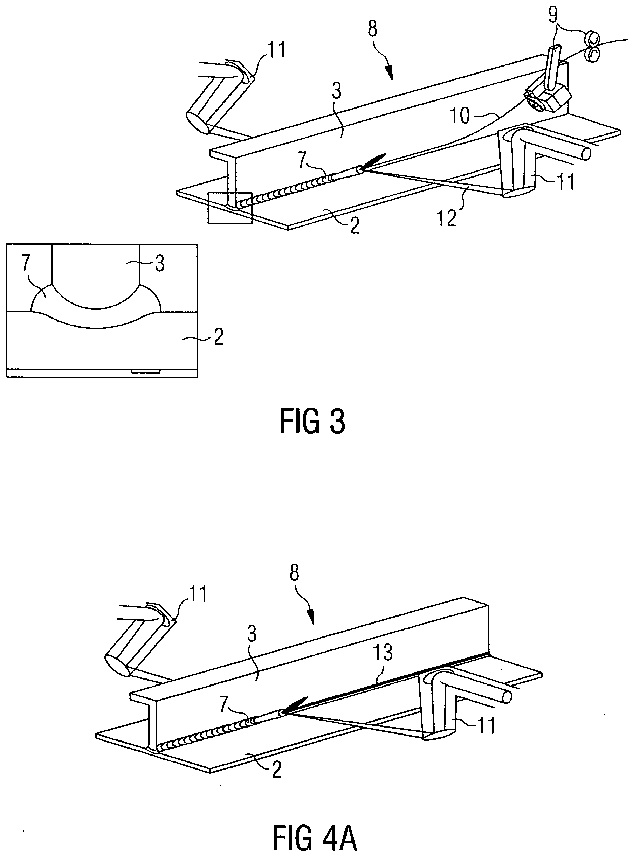

Fig. 3 zeigt eine perspektivische Ansicht eines Systems 8 zur Herstellung der in Figur 2 gezeigten geschweißten Struktur, und eine Querschnittsansicht einer gebildeten Schweißnaht.

In Fig. 3 ist beispielhaft gezeigt, wie ein Stringer 3 mit der Außenhaut 2 eines Flugzeugrumpfes verschweißt wird. In gleicher Weise ist es möglich, auch direkt den Clip 5 mit der Außenhaut 2 des Flugzeugrumpfes zu verschweißen.

Gemäß dem in Fig. 3 gezeigten System 8 wird während des Schweißvorgangs mittels einer Drahtfördereinrichtung 9 ein Schweißzusatzwerkstoff-Draht 10 kontinuierlich zugeführt. Eine Wärmequelle 11 sendet beispielsweise einen Laserstrahl 12 an eine Stelle, an der der Stringer 3 mit der Außenhaut 2 zu verschweißen ist. Bei dem in Fig. 3 gezeigten System bewegt sich vorzugsweise die Wärmequelle 11 bzw. der Laserstrahl 12 entlang vorbestimmter Stellen, an denen eine Schweißnaht zu bilden ist.

In Fig. 3 ist eine zweite Wärmequelle 11 gezeigt, die auf der gegenüberliegenden Seite des Stringers 3 ebenfalls eine Schweißverbindung (Schweißnaht) zwischen dem Stringer 3 und der Außenhaut 2 bildet. Obwohl nicht gezeigt, ist es selbstverständlich, dass auch auf der gegenüberliegenden Seite zur Bildung der Schweißnaht eine Drahtfördereinrichtung (nicht gezeigt) angeordnet sein kann.

Fig. 4A zeigt eine perspektivische Ansicht eines Systems zur Herstellung einer geschweißten Struktur gemäß der Erfindung.

Das erfindungsgemäße System 8 unterscheidet sich von dem in Fig. 3 gezeigten System dadurch, dass keine Drahtfördereinrichtung notwendig ist. Ein Schweißzusatzwerkstoff 13 mit bauweisenangepasster Geometrie (in diesem Fall an die Bauform des Stringers 3 angepasst sowie an die Bauform der Außenhaut 2) wird an der Stelle vorpositioniert, an der eine Schweißnaht zu bilden ist. Der Schweißzusatzwerkstoff 13 kann auch nur an die Bauweise (Bauform) des Stringers 3 oder Clips 5 angepasst sein.

Gemäß dem in Fig. 4A gezeigten Ausführungsbeispiel weist das erfindungsgemäße System zwei Wärmequellen 11 auf, die einen Laserstrahl 12 aussenden, um den Stringer 3 und die Außenhaut 2 mittels zwei Schweißnähten 7 (in der Figur ist nur eine gezeigt) zu verbinden. Es ist selbstverständlich, dass je nach Belastungsanforderung auch nur eine Schweißnaht 7 gebildet werden kann.

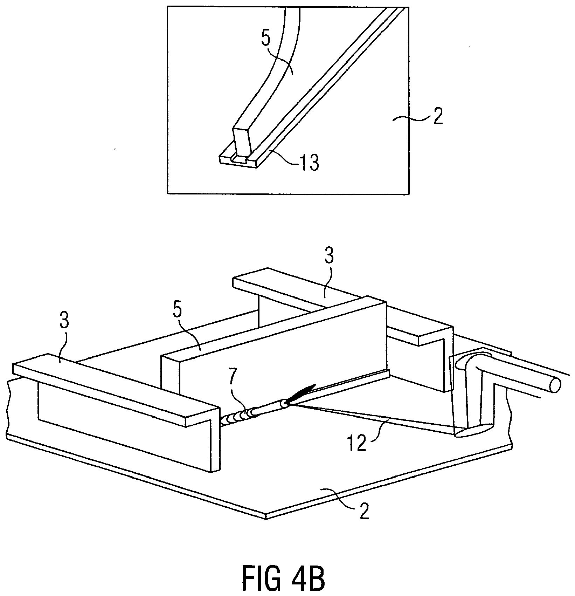

Bei der in Fig. 4B gezeigten Ausführungsform der Erfindung wird anstelle des Stringers 3 der Clip 5 auf die Außenhaut 2 geschweißt, indem der erfindungsgemäße bauweisenangepasste Schweißzusatzwerkstoff 13 vorpositioniert wird. Die in Fig. 4B gezeigten Stringer 3 sind entweder gemäß dem in Fig. 4A gezeigten System mit der Außenhaut 2 verschweißt oder anderweitig, beispielsweise durch Niete (nicht in der Figur gezeigt) an der Außenhaut 2 befestigt.

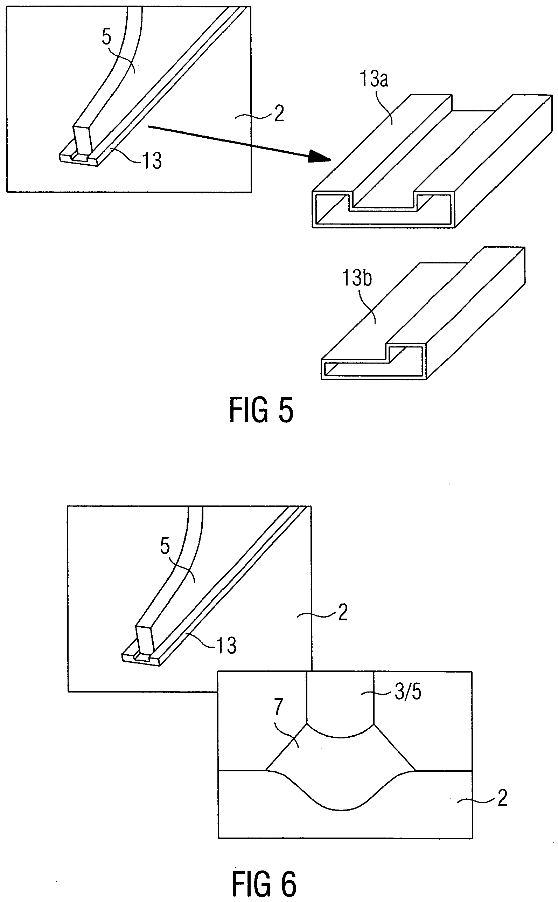

Fig. 5 verdeutlicht Profilformen eines bauweisenangepassten Schweißzusatzwerkstoffs gemäß einem Ausführungsbeispiel der Erfindung.

Fig. 5 zeigt ein U-Profil 13a, welches verwendet wird, um ein beidseitiges Schweißen mit zwei Laserstrahlen durchzuführen. Gemäß der Erfindung wird der Stringer 3 oder der Clip 5 in die durch das U-Profil gebildete Ausnehmung eingesetzt (die Ausnehmung ist an die Bauform des Stringers 3 oder des Clip 5 angepasst) und über die gegenüberliegende Fläche des U-Profils, die beispielsweise an die Bauform der Außenhaut 2 angepasst ist, mit der Außenhaut 2 in Kontakt gebracht. Durch einen Laserstrahl wird Material derart aufgeschmolzen, dass die zu verbindenden Bauteile, in diesem Fall der Stringer 3 oder der Clip 5 und die Außenhaut 2 miteinander verschweißt werden.

Fig. 6 zeigt eine Querschnittsansicht einer Schweißnaht, die gebildet wird, wenn ein Bauweisen angepasster profilierter Schweißzusatzwerkstoff gemäß der Erfindung verwendet wird. Wie in Fig. 6 deutlich zu erkennen, wird eine Schweißnaht 7 mit guten mechanischen Eigenschaften ohne Risse, Kerben und Krater infolge einer homogenen Schweißgutdurchmischung mit dem Zusatzwerkstoff 13 gebildet. Mit anderen Worten, der profilierte bauweisenangepasste Schweißzusatzwerkstoff 13 wird durch den Laserstrahl aufgeschmolzen und geht mit dem aufgeschmolzenen Material des Stringer 3 bzw. des Clip 5 und dem aufgeschmolzenen Material der Außenhaut 2 eine Verbindung ein, um eine Schweißnaht 7 zu bilden.

### Bezugszeichenliste:

- 1: Flugzeugrumpf
- 2: Außenhaut
- 3: Stringer
- 4: Spantprofil
- 5: Clip
- 6: Nieten
- 7: Schweißnaht
- 8: System
- 9: Drahtfördereinrichtung
- 10: Schweißzusatzwerkstoff-Draht
- 11: Wärmequelle
- 12: Laserstrahl
- 13: Schweißzusatzwerkstoff
- 13a: U-Profil
- 13b: L-Profil

## Patentansprüche

1. Verfahren zum Verbinden von Bauteilen für die Luftfahrt mittels Schweißen,
wobei eines der zu verschweißenden Bauteile (3, 5; 2) eine Außenhaut (2) eines Flugzeugrumpfs (1) und das andere zu verschweißende Bauteil mindestens ein Stringer (3) oder Clip (5) ist,
**dadurch gekennzeichnet, dass** ein Schweißzusatzwerkstoff (13) verwendet wird, der eine U-Profilform aufweist, die an die Bauweise des mindestens einen Stringers (3) oder Clips (5) angepasst ist, der vor dem Schweißen an einer Stelle positioniert wird, an der die Bauteile miteinander zu verbinden sind, und der durch Verwendung einer Wärmequelle (11) derart behandelt wird, dass die Bauteile (3, 5; 2) miteinander verschweißt werden.

2. Verfahren nach Anspruch 1, wobei zwei Wärmequellen (11) verwendet werden, um an gegenüberliegenden Seiten des mindestens einen Bauteils (3) eine Schweißnaht zur Verbindung der Bauteile (3, 5; 2) zu bilden.

3. Verfahren nach Anspruch 1 oder 2, wobei die Wärmequelle (11) ein Laserstrahl ist.

## Claims

1. Method for bonding components by welding,
wherein one of the components (3, 5; 2) to be welded is an external skin (2) of an aircraft fuselage (1) and the other component to be welded is at least a stringer (3) or a clip (5),
**characterized in that**
a welding additive material (13) is used that has a U-shaped profile that is adapted to conform to the form of the at least one stringer (3) or clip (5), which welding additive material is disposed before the welding at a position, at which the components are to be bonded, and which by use of a heat source (11) is treated such that the components (3, 5; 2) are welded with each other.

2. Method according to claim 1, wherein two heat sources (11) are used in order to form a weld seam on opposing sides of the at least one component (3) for bonding the components (3, 5; 2).

3. Method according to claim 1 or 2, wherein the heat source (11) is a laser beam.

## Revendications

1. Procédé destiné à relier des éléments pour l'aéronautique au moyen d'un soudage,
dans lequel un des éléments à souder (3, 5 ; 2) est un revêtement extérieur (2) d'un fuselage d'aéronef (1) et l'autre élément à souder est au moins une lisse (3) ou un clip (5),
**caractérisé en ce qu'**un matériau d'apport (13) pour le soudage est utilisé, lequel présente une forme de profilé en U qui est adaptée au mode de construction de l'au moins une lisse (3) ou clip (5), lequel est positionné avant le soudage en un emplacement où les éléments doivent être reliés les uns aux autres, et lequel est traité en utilisant une source thermique (11) de telle sorte que les éléments (3, 5 ; 2) sont soudés les uns aux autres.

2. Procédé selon la revendication 1, dans lequel deux sources thermiques (11) sont utilisées pour former au niveau des côtés opposés de l'au moins un élément (3) une soudure destinée à relier les éléments (3, 5 ; 2).

3. Procédé selon la revendication 1 ou 2, dans lequel la source thermique (11) est un faisceau laser.
